# EUROPEAN PATENT SPECIFICATION

(11) **EP 1 221 560 B1**
(45) Date of publication and mention of the grant of the patent: **16.11.2005**
(21) Application number: 02000355.4
(22) Date of filing: 04.01.2002
(51) Int. Cl.: F16F 15/26, F02B 75/06

(54) **Engine for a vehicle**
Fahrzeugmotor
Moteur pour véhicule

(30) Priority: 05.01.2001 JP 2001000617
(43) Date of publication of application: 10.07.2002
(73) Proprietor: YAMAHA HATSUDOKI KABUSHIKI KAISHA, Iwata-shi Shizuoka-ken (JP)
(72) Inventor: Takebe, Mitsukazu, Iwata-shi, Shizuoka-ken (JP); Oishi, Akifumi, Iwata-shi, Shizuoka-ken (JP)
(74) Representative: Grünecker, Kinkeldey, Stockmair & Schwanhäusser Anwaltssozietät

(56) References cited:
- WO-A-98/28555
- US-A- 4 412 515
- US-A- 5 255 643
- US-A- 5 535 643
- US-A- 5 873 336
- US-A- 6 032 754
- US-A- 6 070 683
- PATENT ABSTRACTS OF JAPAN vol. 013, no. 036 (M-790), 26 January 1989 (1989-01-26) & JP 63 246528 A (HONDA MOTOR CO LTD), 13 October 1988 (1988-10-13)
- PATENT ABSTRACTS OF JAPAN vol. 1997, no. 11, 28 November 1997 (1997-11-28) & JP 09 193873 A (YAMAHA MOTOR CO LTD), 29 July 1997 (1997-07-29)

## Description

The present invention relates to an engine for a vehicle, in particular a motorcycle, comprising a crankshaft, a camshaft, a balancer driven by the crankshaft, and at least one auxiliary machine, wherein a transmitting means in association with the balancer is provided for transmitting a rotation of the crankshaft to the at least one auxiliary machine, and a camshaft driving transmitting means for transmitting the rotation of the crankshaft to the camshaft.

Such a conventional engine for a motorcycle is, e.g. known from US 4,412,515. Therein, an input shaft of an auxiliary machine such as an oil pump and a cooling water pump is connected to a crankshaft via gears. The input shaft is supported by a crankcase such that it is in parallel with the crankshaft, and has one end part which is connected to, for example, the oil pump. A further engine having a different arrangement of driving means is disclosed in US 5,873,336.

In the conventional engine constituted as above, many sprockets and gears are formed to be directly driven by the crankshaft so that the crankshaft is unavoidably long in length in the axis direction thereof. Further, the overall dimensions of the engine are relatively large. Thus, a motorcycle mounting such an engine has a problem of being unable to take a large bank angle. Also, when the crankshaft is long in length, the resonance rotation speed thereof is close to its normal rotation speed range so that there tend to occur problems concerning noise and strength.

It is, therefore, an object of the present invention to provide an engine being reduced in overall size having a simplified structure in which an auxiliary machine is driven by the crankshaft.

This objective is solved in an inventive manner in that the transmitting means comprises an auxiliary machine driving transmitting means which is arranged in the same position in the direction of the axis of said crankshaft as a cam chain comprised by the camshaft driving transmitting means and extends in a direction perpendicular to said axis of said crankshaft.

Since the auxiliary machine can be driven utilizing the balancer, which is one of the component parts of the engine, there is no need to form a sprocket for exclusively driving the auxiliary machine so that the number of the sprockets to be formed on the crankshaft can be reduced. Thus, the overall dimensions of the motor are beneficially reduced. Since the auxiliary machine driving transmitting means is arranged in the same axial position as the cam chain, axial space can be economically used for shortening the engine's length.

It is preferable if the balancer is geared to the crankshaft.

Also, the auxiliary machine beneficially comprises an oil pump or a cooling water pump or a fuel pump.

Additionally, the auxiliary machine driving transmitting means is constituted, in particular, by a chain, a belt, or a gear.

According to a preferred embodiment, the transmitting means further comprises a driving shaft and an intermediate shaft, wherein the driving shaft and the intermediate shaft are geared to each other through gears, and wherein the balancer is connected to the intermediate shaft by the auxiliary machine driving transmitting means.

It is further preferable if the auxiliary machine driving transmitting means is arranged to extend through a dead space D located behind the cam chain.

According to a further preferred embodiment, the engine is a unit swing type, water-cooled, four-cycle single-cylinder engine. Even more preferably a vehicle is constituted by a scooter type motorcycle comprising an engine according to at least one of the claims 1 to 7.

Since the engine for a motorcycle has preferably the features that a balancer is geared with a crankshaft, that an auxiliary machine is connected to the balancer via the auxiliary machine-driving transmitting means, and that the auxiliary machine-driving transmitting means is arranged in the same position as the camshaft-driving transmitting means for transmitting rotation of the crankshaft to a camshaft in the direction of an axis of the crankshaft and extends in a direction perpendicular to the axis of the crankshaft, the crankcase is not increased in size.

Moreover, since the auxiliary machine-driving transmitting means can be arranged in the same position as the camshaft-driving transmitting means in the vehicle width direction utilizing a dead space formed around the camshaft-driving transmitting means, the crankcase is not increased in size in the vehicle width direction to provide the auxiliary machine-driving transmitting means.

Further preferred embodiments are subject to the subclaims.

In the following, the present invention is explained in greater detail with respect to several embodiments thereof in conjunction with the accompanying drawings, wherein:
- Fig. 1: is a side view of a motorcycle mounting an engine according to an embodiment;
- Fig. 2: is a plan view of the engine for a motorcycle according to this embodiment;
- Fig. 3: is a left side view the engine for a motorcycle according to the present embodiment;
- Fig. 4: is a right side view of the engine for a motorcycle according to the present embodiment;
- Fig. 5: is a cross-sectional view of a crankshaft and a balancer taken along the line V-V of Fig. 3; and
- Fig. 6: is a cross-sectional view of an oil pump portion taken along the line VI-VI of Fig. 4.

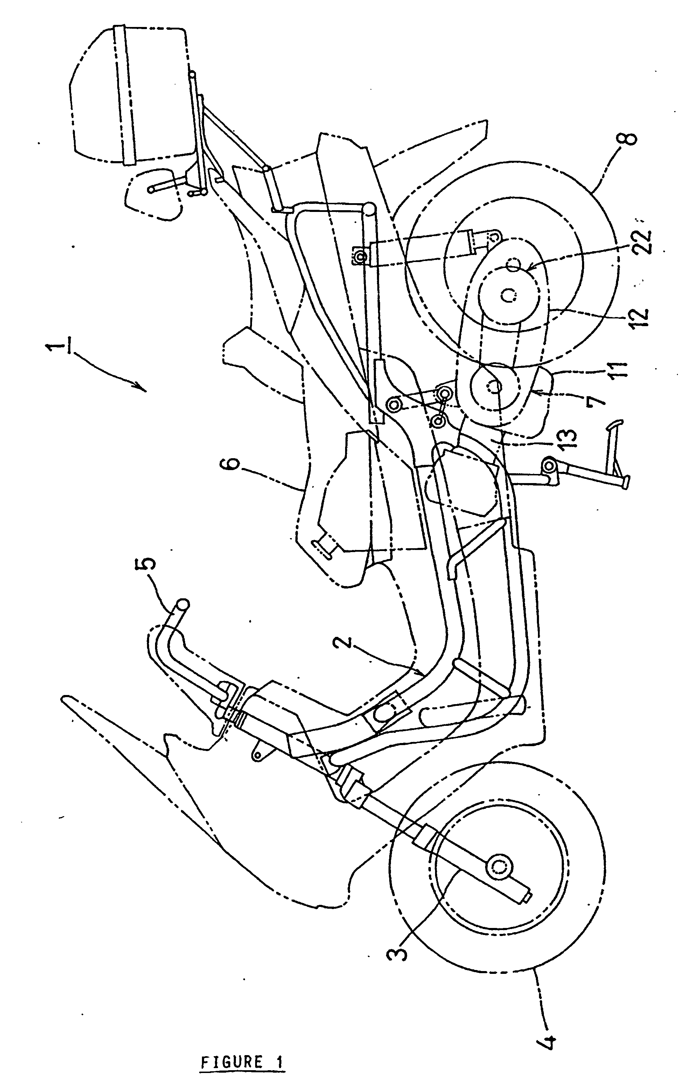

Description will be hereinafter made in detail to the embodiment of an engine for a motorcycle with reference to Fig. 1 to Fig. 6.

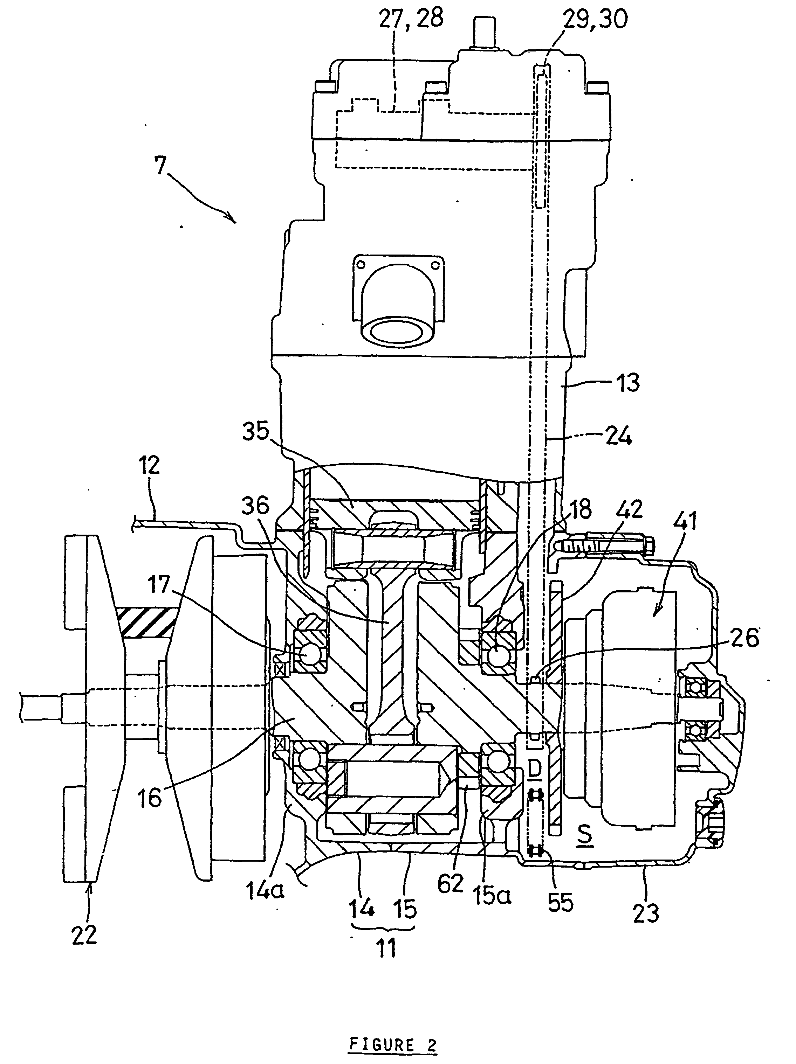

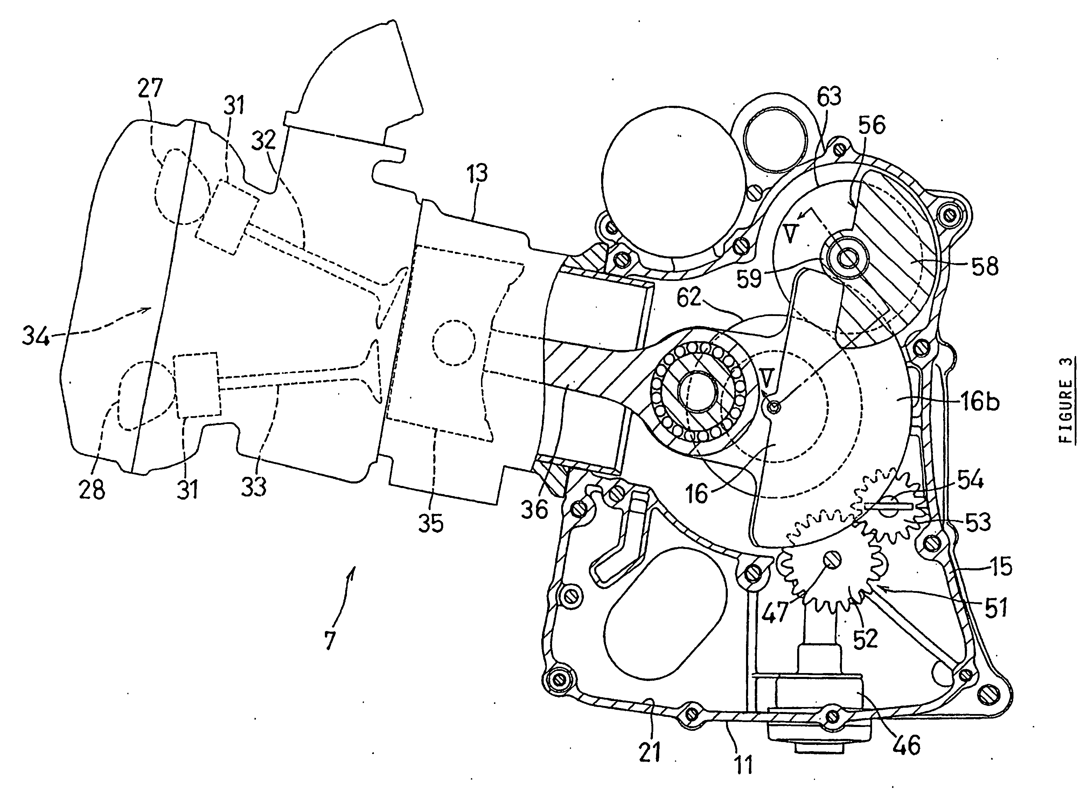

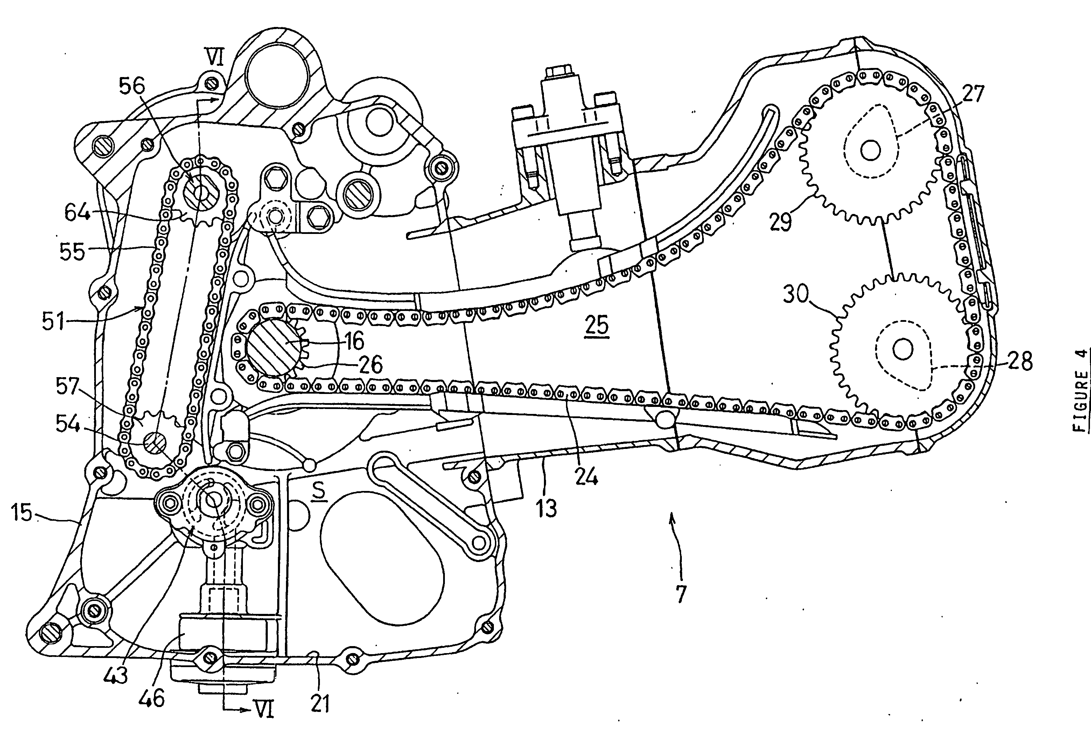

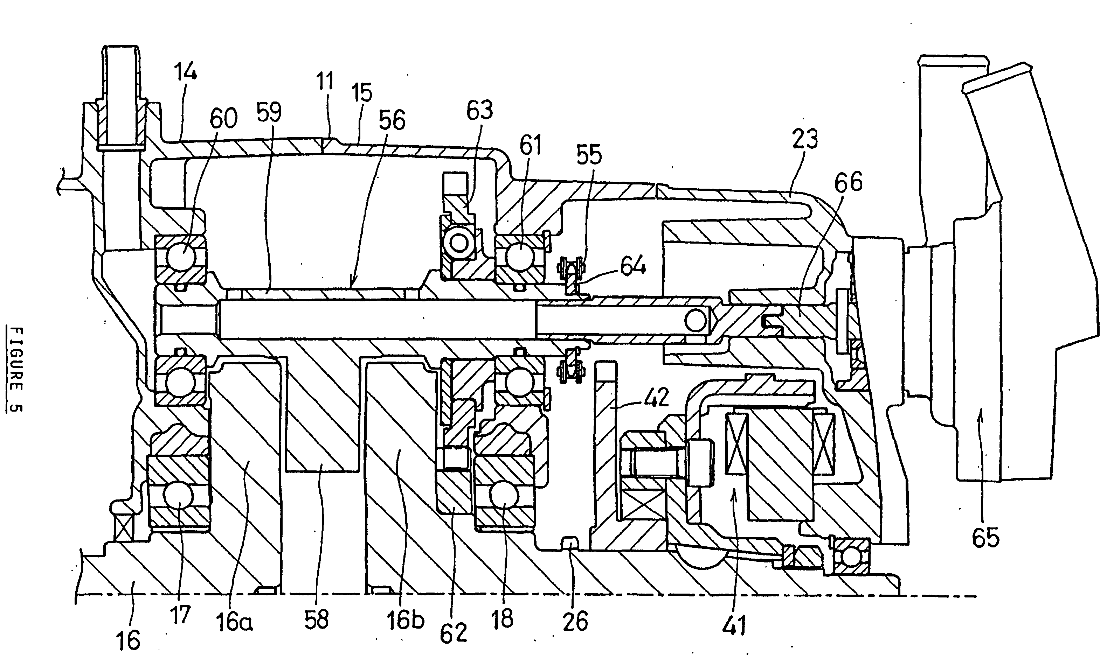

Fig. 1 is a side view of a motorcycle mounting an engine according to the present embodiment. Fig. 2 is a plan view of the engine for a motorcycle according to the present embodiment, wherein a crankshaft part is broken away. Fig. 3 is a left side view the engine for a motorcycle according to the present embodiment, wherein a crankcase and a part of cylinder are broken away. Fig. 4 is a right side view of the engine for a motorcycle according to the present embodiment, broken way so that a chain chamber may be exposed. Fig. 5 is a cross-sectional view of the crankshaft and a balancer taken along the line V-V of Fig. 3. Fig. 6 is a cross-sectional view of an oil pump portion taken along the line VI-VI of in Fig. 4.

In the drawings, designated as 1 is a scooter-type motorcycle according to this embodiment. In Fig. 1, designated as 2 is a body frame, as 3 is a front fork, as 4 is a front wheel, as 5 is a steering handle, as 6 is a seat, as 7 is an engine according to the present embodiment, and as 8 is a rear wheel.

The engine 7 is a unit swing type, water-cooled, four-cycle single-cylinder engine, wherein a transmission case 12 in integrally formed with a crankcase 11. The engine 7 is supported on the body frame 2 for vertical swinging movement such that an axis of a cylinder 13 is inclined upward toward the front of the vehicle. The transmission case 12 has a rear end part on which a rear wheel 8 is rotatably supported.

As shown in Fig. 2, the crankcase 11 can be separated in the vehicle width direction into a left half part 14 and a right half part 15. The left half part 14 and the right half part 15 have side walls 14a and 15a, respectively, on which a crankshaft 16 is rotatably supported via bearings 17 and 18. As shown in Fig. 3 and Fig. 4, an oil pan 21 is formed at a lower end part of the crankcase 11.

The left half part 14 of the crankcase 11 has a left end part to which a transmission case cover (not shown) is fixed and constitutes a transmission case 12 together with the transmission cover. In the transmission case 12 is accommodated a V-belt automatic transmission 22 mounted on the left side end of the crankshaft 16.

The right half part 15 of the crankcase 11 has a right end part to which a crankcase cover 23 is fixed. As shown in Fig. 4, a space S between the right haft part 15 and the crankcase cover 23 is connected to a chain chamber 25 of the cylinder 13 accommodating a cam chain 24. The cam chain 24 is trained over a sprocket 26 for the cam chain integrally formed with the crankshaft 16 and camshaft side sprockets 29 and 30 fixed on an intake camshaft 27 and an exhaust camshaft 28, respectively.

The cam chain 24 constitutes the camshaft-driving transmitting means according to the present embodiment. The engine 7 is a so-called DOHC type, which has the intake camshaft 27 and the exhaust camshaft 28, and employs a valve operating device 34 in which the camshafts 27 and 28 drive an intake valve 32 and an exhaust valve 33, respectively, each via a valve lifter 31 as shown in Fig. 3. In Fig. 3, designated as 35 is a piston, and as 36 is a connecting rod.

As shown in Fig. 2, in the space S formed between the crankcase cover 23 and the right half part 15 of the crankcase 11 are accommodated a flywheel magneto 41 provided on the right side end of the crankshaft 16, a gear 42 for a starter and an oil pump 43 (see Fig. 4). The oil pump 43 constitutes the auxiliary machine according to the present embodiment. The gear 42 for the starter is fixed on the crankshaft 16, between the sprocket 26 for the cam chain and the flywheel magneto 41, and in meshing engagement with a starter motor (not shown).

As shown in Fig. 6, the oil pump 43 has a pump housing 44 accommodating a rotor 45 and is fixed on the side wall 15a. When the rotor 45 is rotated, oil in the oil pan 21 is sucked up through a straighter 46 and fed to parts to be lubricated or cooled thereby. The rotor 45 is fixed on a driving shaft 47 extending through the side wall 15a and toward the inside of the vehicle body. The rotation of the crankshaft 16 is transmitted to the rotor 45 by transmitting means 51 having the driving shaft 47.

As shown in Fig. 6, the transmitting means 51 comprises the driving shaft 47, an intermediate shaft 54 geared with the driving shaft 47 via gears 52 and 53, a balancer 56 connected to the intermediate shaft 54 via an oil pump driving chain 55 and so on. The oil pump driving chain 55 constitutes the auxiliary machine-driving transmitting means according to the present embodiment.

The intermediate shaft 54 is rotatably supported by the side wall 15a of the right half part 15 of the crankcase 11 and has one end part which extends toward the inside of the vehicle body from the side wall 15a and on which the gear 53 is fixed and the other end part which extends toward the outside of the vehicle body from the side wall 15a and on which a driven sprocket 57 for the oil pump driving chain 55 is fixed.

The balancer 56 is a device for reducing vibration by a constitution similar to that of a conventionally well-known device, wherein, as shown in Fig. 5, a weight 58 arranged between webs 16a and 16b of the crankshaft 16 is integrally formed with a shaft.59, which is arranged in parallel with the crankshaft 16 and rotatably supported by the crankcase 11 via bearings 60 and 61. The balancer 56 is geared with the crankshaft 16 via gears 62 and 63.

The shaft 59 of the balancer 56 has a right end part which is protruded sideward from the bearing 61 and on which a driving sprocket 64 over which the oil pump driving chain 55 is trained is fixed. The protruded end of the shaft 59 is connected to an input shaft 66 of a cooling water pump 65. The cooling water pump 65 is for supplying cooling water to the engine 7 and supported by the crankcase cover 23.

As shown in Fig. 3, the balancer 56 is arranged above and behind the crankshaft 16. The intermediate shaft 54 connected to the balancer 56 via the oil pump driving chain 55 is arranged below and behind the crankshaft 16 as shown in Fig. 4. The positions of the intermediate shaft 54 and the balancer 56 are so determined that the oil pump driving chain 55 connecting these extends in a direction perpendicular to the axis of the crankshaft 16 and downward toward the rear behind the cam chain 24 as shown in Fig. 4. Namely, in the engine 7, the oil pump driving chain 55 is arranged to extend through a dead space D (see Fig. 2) formed behind the cam chain 24.

In the engine 7 for a motorcycle constituted as above, when the crankshaft 16 is rotated, the rotation of the crankshaft 16 is transmitted to the oil pump 43 via balancer 56, the oil pump driving chain 55, the intermediate shaft 54 and the gears 52 and 53. Thus, the oil pump 43 can be driven utilizing the balancer 56, which is one of the component parts of the engine 7.

Therefore, in the engine 7, there is no need to form a sprocket for exclusively driving the oil pump 43 on the crankshaft 16 so that the number of sprocket to be formed on the crankshaft 16 can be reduced. The oil pump driving chain 55 can be arranged in the same position as the cam chain 24 in the vehicle width direction utilizing the dead space D formed behind the cam chain 24 so that the crankcase 11 is not increased in size in the vehicle width direction to provide the oil pump driving chain 55.

As a result, the overall length of the crankshaft 16 can be shortened so that the motorcycle 1 mounting the engine 7 is allowed to take a large bank angle. Additionally, when the crankshaft 16 is shortened, the resonant rotation speed thereof can be separated away from its normal rotation speed range so that noise can be reduced and occurrence of problems concerning strength can be avoided.

In the above embodiment, an example in which the auxiliary machine is the oil pump has been described. However, the teaching of the present embodiment need not be limited to the above embodiment but is applicable to other auxiliary machines such as a cooling water pump and a fuel pump for a fuel injection device in place of the oil pump. As the transmitting means used to embody the present embodiment, a belt or a gear may be employed instead of the chain.

As has been described above, according to the teaching of the present embodiment, the auxiliary machine can be driven utilizing the balancer, which is one of the component parts of the engine. Thus, there is no need to form a sprocket for exclusively driving the auxiliary machine on the crankshaft so that the number of the sprockets to be formed on the crankshaft can be reduced. Additionally, since the auxiliary machine-driving transmitting means can be arranged in the same position as the camshaft-driving transmitting means in the vehicle width direction utilizing the dead space formed around the camshaft-driving transmitting means, the crankcase is not increased in size in the vehicle width direction to provide the auxiliary machine-driving transmitting means.

Therefore, in the engine according to the present embodiment, since the overall length of the crankshaft can be shortened by employing the structure in which the auxiliary machine is driven by the crankshaft, the engine can be reduced in size in the vehicle width direction as compared with a conventional engine.

Thus, a motorcycle mounting the engine according to the present embodiment is allowed to take a large bank angle. Additionally, since the resonant rotation speed of the crankshaft can be separated away from the normal rotation speed range thereof by shortening the crankshaft, noise can be reduced and occurrence of problems concerning strength can be avoided.

According to the above described embodiment, the engine for a motorcycle is characterized in that a balancer is geared with a crankshaft, that an auxiliary machine is connected to said balancer via auxiliary machine-driving transmitting means, that said auxiliary machine-driving transmitting means is arranged in the same position as camshaft-driving transmitting means for transmitting rotation of said crankshaft to a camshaft and extends in a direction perpendicular to said axis of said crankshaft.

Thus, the balancer 56 is geared with a crankshaft 16. An oil pump 43 is connected to the balancer 56 via an oil pump driving chain 55. The oil pump driving chain 55 is arranged in the same position as a cam chain 24 in the direction of an axis of the crankshaft 16 and extends in a direction perpendicular to the axis of the crankshaft 16.

Due to this structure, the overall length of a crankshaft is beneficially shortened while employing a structure in which an auxiliary machine is driven by the crankshaft.

## Claims

1. An engine for a vehicle, in particular a motorcycle, comprising a crankshaft (16), a camshaft (27, 28), a balancer (56) driven by the crankshaft (16), and at least one auxiliary machine (43, 65), wherein a transmitting means (51) in association with the balancer (56) is provided for transmitting a rotation of the crankshaft (16) to the at least one auxiliary machine (43, 65), and a camshaft driving transmitting means (24, 26, 29, 30) is provided for transmitting the rotation of the crankshaft (16) to the camshaft (27, 28), **characterized in that** the transmitting means (51) comprises an auxiliary machine driving transmitting means (55) which is arranged in the same position in the direction of the axis of said crankshaft (16) as a cam chain (24) comprised by the camshaft driving transmitting means (24, 26, 29, 30) and extends in a direction perpendicular to said axis of said crankshaft (16).

2. An engine for a vehicle according to claim 1, **characterized in that** the balancer (56) is geared to the crankshaft (16).

3. An engine for a vehicle according to claim 1 or 2, **characterized in that** the auxiliary machine (43, 65) comprises an oil pump (43) or a cooling water pump (65) or a fuel pump.

4. An engine for a vehicle according to at least one of the preceding claims 1 to 3, **characterized in that** the auxiliary machine driving transmitting means (55) is constituted by a chain, a belt, or a gear.

5. An engine for a vehicle according to at least one of the claims 1 to 4, **characterized in that** the transmitting means (51) further comprises a driving shaft (47) and an intermediate shaft (54), wherein the driving shaft (47) and the intermediate shaft (54) are geared to each other through gears (52, 53), and wherein the balancer (56) is connected to the intermediate shaft (54) by the auxiliary machine driving transmitting means (55).

6. An engine for a vehicle according to at least one of the claims 1 to 5, **characterized in that** the auxiliary machine driving transmitting means (55) is arranged to extend through a dead space (D) formed around the camshaft-driving transmitting means.

7. An engine for a vehicle according to at least one of the claims 1 to 6, **characterized in that** the engine (7) is a unit swing type, water-cooled, four-cycle single-cylinder engine.

8. Scooter type motorcycle, **characterized by** comprising an engine according to at least one of the claims 1 to 7.

## Patentansprüche

1. Motor für ein Fahrzeug, insbesondere für ein Motorrad, das aufweist eine Kurbelwelle (16), eine Nockenwelle (27, 28), eine Ausgleichsvorrichtung (56), angetrieben durch die Kurbelwelle (16) und zumindest eine Zubehöreinrichtung (43, 65), wobei eine Übertragungseinrichtung (51) in Verbindung mit der Ausgleichsvorrichtung (56) vorgesehen ist für das Übertragen einer Drehung der Kurbelwelle (16) auf zumindest eine Zubehöreinrichtung (43, 65), und eine Nockenwellen- Antriebsübertragungseinrichtung (24, 26, 29, 30) für das Übertragen der Drehung der Kurbelwelle (16) auf die Nockenwelle (27, 28) vorgesehen ist,
**dadurch gekennzeichnet, dass** die Übertragungseinrichtung (51) eine Zubehöreinrichtungs- Antriebsübertragungseinrichtung (55) aufweist, die in derselben Position in der Richtung der Achse der Kurbelwelle (16) angeordnet ist, wie eine Nockenkette (24), die die Nockenwellen- Antriebsübertragungseinrichtung (24, 26, 29, 30) bildet und in eine Richtung rechtwinklig zu der Achse der Kurbelwelle (16) erstreckt.

2. Motor für ein Fahrzeug nach Anspruch 1, **dadurch gekennzeichnet, dass** die Ausgleichsvorrichtung (56) mit der Kurbelwelle (16) in Zahnradeingriff gebracht ist.

3. Motor für ein Fahrzeug nach Anspruch 1 oder 2, **dadurch gekennzeichnet, dass** die Zubehöreinrichtung (43, 65) eine Ölpumpe (43) oder eine Kühlwasserpumpe (65) oder eine Kraftstoffpumpe ist.

4. Motor für ein Fahrzeug nach zumindest einem der vorhergehenden Ansprüche 1 bis 3, **dadurch gekennzeichnet, dass** die Zubehöreinrichtungs- Antriebsübertragungseinrichtung (55) durch eine Kette, einen Riemen oder ein Zahnrad gebildet ist.

5. Motor für ein Fahrzeug nach zumindest einem der vorhergehenden Ansprüche 1 bis 4, **dadurch gekennzeichnet, dass** die Übertragungseinrichtung (51) außerdem eine Antriebswelle (47) und eine Zwischenwelle (54) aufweist, wobei die Antriebswelle (47) und die Zwischenwelle (54) miteinander durch Zahnräder (52, 53) im Eingriff sind, und wobei die Ausgleichsvorrichtung (56) mit der Zwischenwelle (54) durch die Zubehöreinrichtungs- Antriebsübertragungseinrichtung (55) verbunden ist.

6. Motor für ein Fahrzeug nach zumindest einem der vorhergehenden Ansprüche 1 bis 5, **dadurch gekennzeichnet, dass** die Zubehöreinrichtungs- Antriebsübertragungseinrichtung (55) angeordnet ist, sich durch einen Totraum (D), gebildet um die Nockenwellen- Antriebsübertragungseinrichtung, zu erstrecken.

7. Motor für ein Fahrzeug nach zumindest einem der vorhergehenden Ansprüche 1 bis 6, **dadurch gekennzeichnet, dass** der Motor (7) ein wassergekühlter, Viertakt- Einzelzylindermotor in Schering- Bauart ist.

8. Motorrad vom Roller- Typ, **gekennzeichnet durch** einen Motor entsprechend zumindest einem der Ansprüche 1 bis 7.

## Revendications

1. Moteur pour un véhicule, en particulier une moto, comprenant un vilebrequin (16), un arbre à cames (27, 28), un balancier d'équilibrage (56) entraîné par le vilebrequin (16) et au moins une machine auxiliaire (43, 65), dans lequel un moyen de transmission (51) en association avec le balancier d'équilibrage (56) est fourni pour transmettre une rotation du vilebrequin (16) à ladite au moins une machine auxiliaire (43, 65) et un moyen de transmission (24, 26, 29, 30) entraînant l'arbre à cames est fourni pour transmettre la rotation du vilebrequin (16) à l'arbre à cames (27, 28), **caractérisé en ce que** le moyen de transmission (51) comprend un moyen de transmission (55) entraînant la machine auxiliaire, qui est disposé dans une position identique, dans la direction de l'axe dudit vilebrequin (16), à celle d'une chaîne de came (24) contenue dans le moyen de transmission (24, 26, 29, 30) entraînant l'arbre à cames et s'étend dans une direction perpendiculaire audit axe dudit vilebrequin (16).

2. Moteur pour un véhicule selon la revendication 1, **caractérisé en ce que** le balancier d'équilibrage (56) est relié au vilebrequin (16) par engrenage.

3. Moteur pour un véhicule selon la revendication 1 ou 2, **caractérisé en ce que** la machine auxiliaire (43, 65) comprend une pompe à huile (43) ou une pompe à eau de refroidissement (65) ou une pompe à carburant.

4. Moteur pour un véhicule selon au moins l'une des revendications précédentes 1 à 3, **caractérisé en ce que** le moyen de transmission (55) entraînant la machine auxiliaire est constitué d'une chaîne, d'une courroie ou d'un engrenage.

5. Moteur pour un véhicule selon au moins l'une des revendications 1 à 4, **caractérisé en ce que** le moyen de transmission (51) comprend en outre un arbre moteur (47) et un arbre intermédiaire (54), dans lequel l'arbre moteur (47) et l'arbre intermédiaire (54) sont engrenés entre eux au moyen d'engrenages (52, 53) et dans lequel le balancier d'équilibrage (56) est relié à l'arbre intermédiaire (54) par le moyen de transmission (55) entraînant la machine auxiliaire.

6. Moteur pour un véhicule selon au moins l'une des revendications 1 à 5, **caractérisé en ce que** le moyen de transmission (55) entraînant la machine auxiliaire est conçu pour s'étendre dans un espace inutilisé (D) formé autour du moyen de transmission entraînant l'arbre à cames.

7. Moteur pour un véhicule selon au moins l'une des revendications 1 à 6, **caractérisé en ce que** le moteur (7) est un moteur de type monobloc basculant, refroidi par eau, quatre temps, monocylindre.

8. Moto de type scooter, **caractérisée en ce qu'**elle comprend un moteur selon au moins l'une des revendications 1 à 7.
